# EUROPEAN PATENT APPLICATION

(11) **EP 3 241 736 A1**
(43) Date of publication of application: **08.11.2017**
(21) Application number: 16884961.0
(22) Date of filing: 15.01.2016
(51) Int. Cl.: B63H 23/36, F16J 15/3204, F16J 15/46

(54) **STERN TUBE SEALING SYSTEM, STERN TUBE SEALING DEVICE, SHIP, AND STERN TUBE SEALING METHOD**

(71) Applicant: Wartsila Japan Ltd., Hyogo 650-0045 (JP)
(72) Inventor: OKAMOTO, Mitsuhiro, Toyama-shi Toyama 930-0916 (JP); HIMENO, Nobuhiro, Toyama-shi Toyama 930-0916 (JP); FUJII, Masahiko, Toyama-shi Toyama 930-0916 (JP)
(74) Representative: TBK
(86) International application number: PCT/JP2016/051174
(87) International publication number: WO 2017/122358

(57) **Abstract**

A stern tube seal system that prevents lubricant oil from flowing out from a stern tube that covers a propeller shaft is provided. The stern tube seal system includes a tubular housing configured to have the propeller shaft inserted therethrough; a first seal ring configured to be supported by the housing and to be in sliding contact with an outer circumferential surface of a liner that externally fits on the propeller shaft; a second seal ring configured to be supported by the housing on a stem side of the first seal ring and to be in sliding contact with the outer circumferential surface of the liner to form a first air chamber between the first seal ring and the second seal ring; an air supply part configured to supply air to the first air chamber at an air pressure greater than or equal to a sea water pressure that is on a stern side of the first seal ring; and a lubricant oil circulation part configured to circulate the lubricant oil in the stern tube at an oil pressure lower than the sea water pressure.

## Description

### TECHNICAL FIELD

The present invention relates to a stern tube seal system, a stern tube seal apparatus, a ship, and a stern tube seal method.

### BACKGROUND ART

In the prior art, a stern tube seal apparatus is known (for example, see Patent Reference No. 1). The stern tube seal apparatus includes a plurality of seal rings that are in sliding contact with a propeller shaft. The propeller shaft is connected to a propeller that turns outside a ship, and the propeller shaft is inserted in a stern tube. In the stern tube seal apparatus, lubricant oil used to lubricate between the propeller shaft and a bearing is sealed in the stern tube.

### PRIOR ART REFERENCE

### PATENT REFERENCE

Patent Reference No. 1: Japanese Patent No. 3813842

### SUMMARY OF THE INVENTION

### PROBLEM TO BE SOLVED BY THE INVENTION

However, in the stern tube seal apparatus according to Patent Reference No. 1, the lubricant oil may leak from the stern tube to the outside of the ship due to abrasion occurring in a stern-side seal ring, a pressure variation in the lubricant oil that fills a chamber defined between the stern-side seal ring and the stern-side seal ring, or the like. In recent years in particular, also from an environmental protection viewpoint, it is required to reduce such a leakage of lubricant oil from a stern tube to the outside of a ship.

The present invention has been devised in consideration of the above-mentioned point, and an object is to provide a stern tube seal system capable of reducing lubricant oil leakage to the outside of a ship.

### MEANS TO SOLVE THE PROBLEM

According to one aspect of the present invention, a stern tube seal system that prevents lubricant oil from flowing out from a stern tube covering a propeller shaft, includes a tubular housing configured to have the propeller shaft inserted therethrough; a first seal ring configured to be supported by the housing and to be in sliding contact with an outer circumferential surface of a liner that externally fits on the propeller shaft; a second seal ring configured to be supported by the housing on a stern side of the first seal ring and to be in sliding contact with the outer circumferential surface of the liner to form a first air chamber between the first seal ring and the second seal ring; an air supply part configured to supply air to the first air chamber at an air pressure greater than or equal to a sea water pressure that is on a stern side of the first seal ring; and a lubricant oil circulation part configured to circulate the lubricant oil in the stern tube at an oil pressure lower than the sea water pressure.

### ADVANTAGEOUS EFFECTS OF THE INVENTION

According to an embodiment of the present invention, a stern tube seal system capable of reducing lubricant oil leakage to the outside of a ship is provided.

### BRIEF DESCRIPTION OF DRAWINGS

FIG. 1 illustrates a general configuration of a stern tube seal system according to a first embodiment.
FIG. 2 illustrates a general configuration of a stern tube seal apparatus according to the first embodiment.
FIG. 3 illustrates a configuration of a seal ring.
FIG. 4 illustrates a general configuration of a stern tube seal system according to a second embodiment.
FIG. 5 illustrates a general configuration of a stern tube seal apparatus according to the second embodiment.
FIG. 6 illustrates a general configuration of a stern tube seal system according to a third embodiment.
FIG. 7 illustrates a general configuration of a stern tube seal apparatus according to the third embodiment.
FIG. 8 illustrates a general configuration of a stern tube seal system according to a fourth embodiment.
FIG. 9 illustrates a general configuration of a stern tube seal apparatus according to the fourth embodiment.

### MODE FOR CARRYING OUT THE INVENTION

Below, embodiments of the present invention will be described with reference to the drawings. In each drawing, the same reference numerals are given to the same elements, and duplicate description may be omitted.

### [First embodiment]

### <Stern tube seal system>

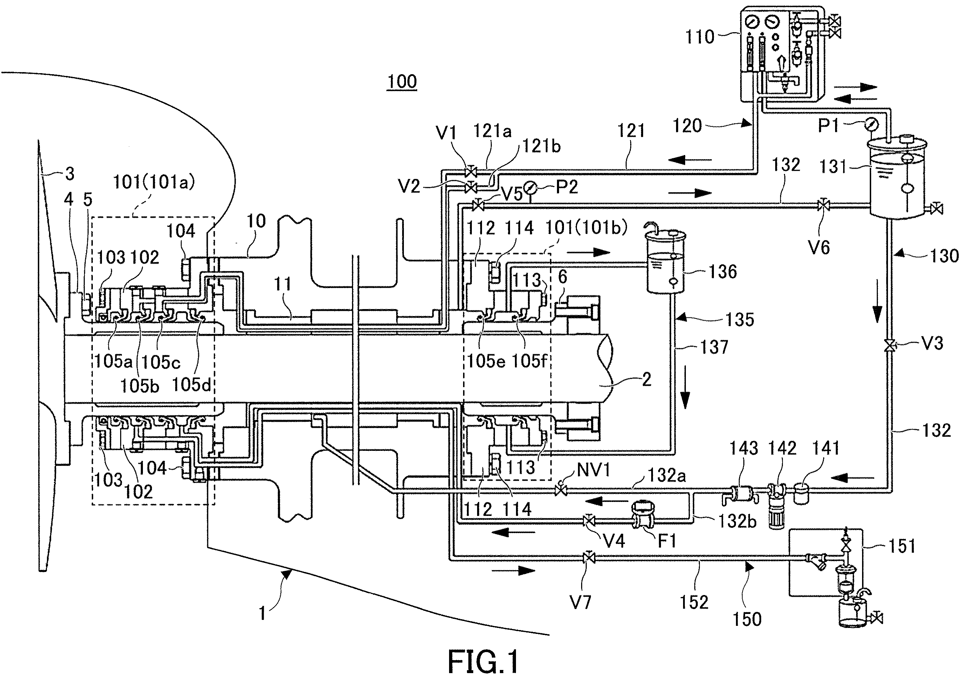

FIG. 1 illustrates a general configuration of a stern tube seal system 100 according to a first embodiment.

As illustrated in FIG. 1, the stern tube seal system 100 includes a stern tube seal apparatus 101, an air supply part 120, a stern-side circulation part 130, a stern-side circulation part 135, and a discharge part 150. Note that, hereinafter, along an axial direction of a propeller shaft 2, a propeller 3 side will be referred to as a stern side, and a side opposite to the propeller 3 will be referred to as a stern side.

### (Stern tube seal apparatus)

The stern tube seal apparatus 101 includes a stern-side seal apparatus 101a and a stern-side seal apparatus 101b, and prevents lubricant oil supplied to between the propeller shaft 2 and a bearing 11 from leaking to the outside or the inside of a ship from a stern tube 10 that covers the propeller shaft 2.

The stern-side seal apparatus 101a includes a housing 102, a first seal ring 105a, a second seal ring 105b, a third seal ring 105c, and a fourth seal ring 105d, and is connected to the stern tube 10 from the outside of the ship.

The housing 102 includes a plurality of tubular members connected together using bolts 103 or the like, and the propeller shaft 2 is inserted in the housing 102. Also, the housing 102 holds the first seal ring 105a, the second seal ring 105b, the third seal ring 105c, and the fourth seal ring 105d, and is connected to the stern side of the stern tube 10 from the outside of the ship using bolts 104.

The first seal ring 105a, the second seal ring 105b, the third seal ring 105c, and the fourth seal ring 105d are annular members made of an elastic material, and have respective inner circumferential surfaces that are in sliding contact with the outer circumferential surface of a liner 4. The liner 4 is a tubular member made of a metal material, is externally fit on the propeller shaft 2, is fixed to the propeller 3 using bolts 5, and turns together with the propeller shaft 2.

The stern-side seal apparatus 101b includes a housing 112, a fifth seal ring 105e, and a sixth seal ring 105f.

The housing 112 includes a plurality of tubular members connected together using bolts 113 or the like, and the propeller shaft 2 is inserted in the housing 112. Also, the housing 112 holds the fifth seal ring 105e and the sixth seal ring 105f, and is connected to the stern side of the stern tube 10 using bolts 114.

The fifth seal ring 105e and the sixth seal ring 105f are annular members made of an elastic material, and have respective inner circumferential surfaces that are in sliding contact with the outer circumferential surface of a liner 6. The liner 6 is a tubular member made of a metal material, is externally fit on and fixed to the propeller shaft 2, and turns together with the propeller shaft 2.

### (Air supply part)

The air supply part 120 includes an air conditioning unit 110 and an air supply passage 121, and supplies air to the stern-side seal apparatus 101a of the stern tube seal apparatus 101. In detail, the air supply part 120 supplies air having an air pressure adjusted to be greater than or equal to the sea water pressure, to between the first seal ring 105a and the second seal ring 105b and to between the second seal ring 105b and the third seal ring 105c in the stern-side seal apparatus 101a at a constant flow rate.

The air conditioning unit 110 includes a regulator, a flow controller, an air relay, a plurality of valves, and so forth. The air conditioning unit 110 reduces a pressure of air supplied from a compressor, not shown, using the regulator, and supplies the air to the stern-side seal apparatus 101a from the flow controller through the air supply passage 121.

The flow controller adjusts an air pressure to be supplied to the air supply passage 121 to be greater than or equal to the sea water pressure depending on a variation in the sea water pressure that presses the first seal ring 105a of the stern-side seal apparatus 101a in such a manner as to supply the air to the stern-side seal apparatus 101a at the set flow rate.

The air supply passage 121 is formed to pass through from the inside of the ship to the stern tube 10 and to the housing 102 of the stern-side seal apparatus 101a, and supplies air from the air conditioning unit 110 to the stern-side seal apparatus 101a. The air supply passage 121 includes a first air supply passage 121a and a second air supply passage 121b.

The first air supply passage 121a is formed to lead to between the second seal ring 105b and the third seal ring 105c in the stern-side seal apparatus 101a. Also, the second air supply passage 121b is formed to lead to between the first seal ring 105a and the second seal ring 105b in the stern-side seal apparatus 101a. The first air supply passage 121a and the second air supply passage 121b have valves V1 and V2.

Air supplied by the flow controller of the air conditioning unit 110 is brought to the stern-side seal apparatus 101a from the air supply passage 121 through the first air supply passage 121a and the second air supply passage 121b. The air brought to the inside of the stern-side seal apparatus 101a is discharged to the outside of the stern-side seal apparatus 101a through between the first seal ring 105a and the liner 4 against the sea water pressure.

### (Lubricant oil circulation part)

The stern tube seal system 100 acts as a lubricant oil circulation part and includes a stern-side circulation part 130 and a stern-side circulation part 135.

### (Stern-side circulation part)

The stern-side circulation part 130 includes the air conditioning unit 110, a lubricant oil tank 131, and a stern-side circulation passage 132. The stern-side circulation part 130 circulates lubricant oil so as to supply the lubricant oil from the lubricant oil tank 131 to the stern tube 10 and to the stern-side seal apparatus 101a, and again return to the lubricant oil tank 131.

In the air conditioning unit 110, the flow controller adjusts an air pressure to be supplied to the stern-side seal apparatus 101a depending on the sea water pressure. Also, the flow controller outputs a signal corresponding to the sea water pressure to the air relay. The air relay adjusts an air pressure in the lubricant oil tank 131 to be lower than the sea water pressure by a predetermined differential pressure based on the signal that is output by the flow controller.

As a result of the air pressure in the lubricant oil tank 131 being thus adjusted to be lower than the sea water pressure, the oil pressure of the lubricant oil circulating through the stern tube 10 and the stern-side seal apparatus 101a is lower than the sea water pressure.

Note that it is also possible for the air conditioning unit 110 to reduce the air pressure supplied from the flow controller and to supply the air to the lubricant oil tank 131, without using the air relay. Also, although the lubricant oil tank 131 according to the present embodiment is a pressurized tank capable of adjusting an oil pressure of lubricant oil using the air pressure inside the tank, the lubricant oil tank 131 is not limited thereto. For example, it is possible that the lubricant oil tank 131 is a gravity tank supplying lubricant oil, having a constant pressure due to the force of gravity, to the stern tube 10.

The lubricant oil tank 131 and the stern-side circulation passage 132 have pressure meters P1 and P2 to check an air pressure in the tank and an oil pressure of lubricant oil.

The stern-side circulation passage 132 has a valve V3, a filter 141, a pump 142, and a cooler 143 in a passage that supplies lubricant oil to the stern tube 10 and to the stern-side seal apparatus 101a. The filter 141 removes foreign bodies from lubricant oil to be supplied to the stern tube 10 and to the stern-side seal apparatus 101a by the pump 142. Also, as a result of lubricant oil cooled by the cooler 143 being supplied, a temperature rise inside the stern tube 10 and the stern-side seal apparatus 101a is controlled.

The stern-side circulation passage 132 has branches, i.e., a first circulation passage 132a and a second circulation passage 132b, as passages supplying lubricant oil to the stern tube 10 and to the stern-side seal apparatus 101a. The first circulation passage 132a leads to the stern tube 10 and supplies lubricant oil to between the propeller shaft 2 and the bearing 11. The second circulation passage 132b leads to the stern-side seal apparatus 101a and supplies lubricant oil to between the third seal ring 105c and the fourth seal ring 105d.

The first circulation passage 132a has a needle valve NV1. The needle valve NV1 has a valve position adjusted so that lubricant oil will flow through the second circulation passage 132b. The second circulation passage 132b has a flow meter F1 to be used to check a flow rate of lubricant oil, and a valve V4 to open and close the path.

Lubricant oil supplied to the stern tube 10 and the stern-side seal apparatus 101a returns from the stern tube 10 to the lubricant oil tank 131 through the stern-side circulation passage 132, and again flows through the stern-side circulation passage 132 toward the stern tube 10 and the stern-side seal apparatus 101a. The stern-side circulation passage 132 through which lubricant oil flows from the stern tube 10 toward the lubricant oil tank 131 has a pressure meter P2 to be used to check the oil pressure of the lubricant oil, and valves V5 and V6 for opening and closing the passage.

### (Stem-side circulation part)

The stem-side circulation part 135 has a lubricant oil tank 136 and a stem-side circulation passage 137. The lubricant oil stored in the lubricant oil tank 136 circulates in such a manner as to be supplied to the stern-side seal apparatus 101b through the stern-side circulation passage 137, and again returns to the lubricant oil tank 136 through the stern-side circulation passage 137. The lubricant oil tank 136 is placed at such a position as to be able to cause the lubricant oil to circulate at a certain oil pressure.

### (Discharge part)

The discharge part 150 has a discharge unit 151 and a discharge passage 152 with which sea water and lubricant oil having entered the stern-side seal apparatus 101a will be discharged from the stern-side seal apparatus 101a. The discharge passage 152 is formed to lead to between the first seal ring 105a and the second seal ring 105b of the stern-side seal apparatus 101a through which sea water and lubricant oil having entered between the first seal ring 105a and the second seal ring 105b will be discharged. The discharge passage 152 has a valve V7 for opening and closing the passage.

Sea water and lubricant oil discharged through the discharge passage 152 are brought to the discharge unit 151. The discharge unit 151 includes a discharge tank, and collects sea water and lubricant oil discharged to the discharge passage 152 in the discharge tank.

### <Stern tube seal apparatus>

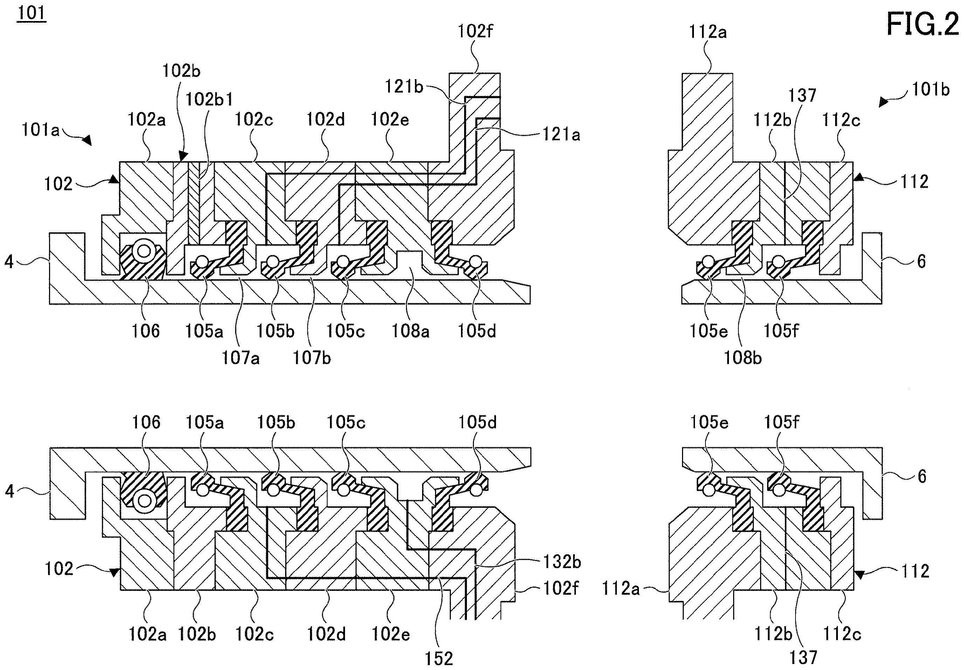

Next, a configuration of the stern tube seal apparatus 101 will be described. FIG. 2 illustrates a general configuration of the stern tube seal apparatus 101 according to the first embodiment.

### (Stern-side seal apparatus)

As illustrated in FIG. 2, the stern-side seal apparatus 101a has the housing 102, the first seal ring 105a, the second seal ring 105b, the third seal ring 105c, the fourth seal ring 105d, and a fishing net avoidance ring 106.

### (Housing)

The housing 102 has a first split housing 102a, a second split housing 102b, a third split housing 102c, a fourth split housing 102d, a fifth split housing 102e, and a sixth split housing 102f in the stated order from the stern side.

Each of the split housings 102a-102f is a tubular member, and the split housings 102a-102f are fixed to the stern tube 10 in such a manner as to be fit in and sequenced relative to each other. Also, each of the split housing 102a-102f has an annular groove formed between the split housing and an adjacent split housing, and the annular grooves hold the seal rings 105a-105d and the fishing net avoidance ring 106.

The housing 102 holds the fishing net avoidance ring 106 between the first split housing 102a and the second split housing 102b. The fishing net avoidance ring 106 is an annular member made of an elastic material, and is externally fit on the liner 4. The fishing net avoidance ring 106 turns together with the liner 4 and is in sliding contact with the housing 102 to prevent a foreign body such as a fishing net from entering the stern-side seal apparatus 101a or the stern tube 10.

Also, the housing 102 holds the first seal ring 105a between the second split housing 102b and the third split housing 102c, and holds the second seal ring 105b between the third split housing 102c and the fourth split housing 102d. Further, the housing 102 holds the third seal ring 105c between the fourth split housing 102d and the fifth split housing 102e, and holds the fourth seal ring 105d between the fifth split housing 102e and the sixth split housing 102f.

The second split housing 102b has an air hole 102b1 formed therein to discharge air supplied to the stern-side seal apparatus 101a. The fourth split housing 102d, the fifth split housing 102e, and the sixth split housing 102f have the first air supply passage 121a formed therein. The third split housing 102c, the fourth split housing 102d, the fifth split housing 102e, and the sixth split housing 102f have the second air supply passage 121b formed therein.

The fifth split housing 102e and the sixth split housing 102f have the second circulation passage 132b formed therein. Also, the third split housing 102c, the fourth split housing 102d, the fifth split housing 102e, and the sixth split housing 102f have the discharge passage 152 formed therein.

### (Seal ring)

The seal rings 105a-105d are annular members made of an elastic material such as a rubber, and each of the seal rings 105a-105d is held by the housing 102 for a sliding contact with the outer circumferential surface of the liner 4. As the elastic material used for the seal rings 105, for example, fluororubber, nitrile rubber, or the like, superior in water resistance and oil resistance, can be cited.

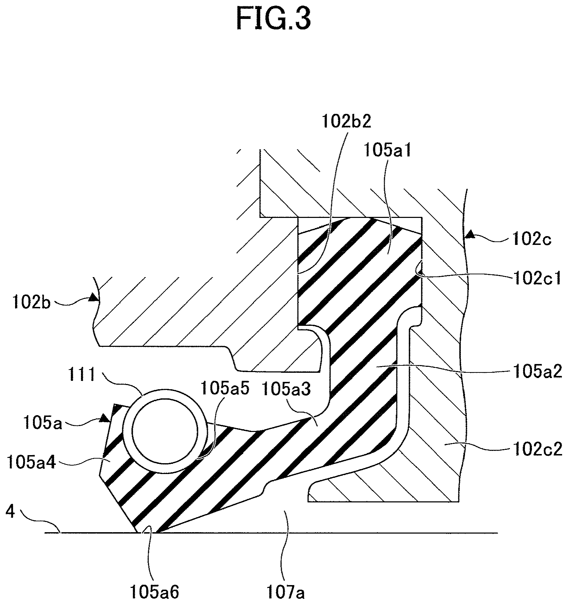

FIG. 3 illustrates a configuration of the first seal ring 105a. As illustrated in FIG. 3, the first seal ring 105a includes a key part 105a1, a heel part 105a2, an arm part 105a3, and a lip part 105a4.

The key part 105a1 is formed at an outer-circumferential-side end of the first seal ring 105a, and is fit in and held by the annular groove formed of a groove 102b2 of the second split housing 102b and a groove 102c1 of the third split housing 102c that are adjacent.

The heel part 105a2 is formed to extend from the key part 105a1 toward the liner 4. The arm part 105a3 is formed to extend on the stern side from an end of the heel part 105a2. The third split housing 102c has a backup ring 102c2 formed to support the heel part 105a2 and the arm part 105a3 of the first seal ring 105a.

The lip part 105a4 is formed at an inner-circumferential-side end of the arm part 105a3, and is in sliding contact with the outer circumferential surface of the liner 4. The lip part 105a4 has a spring groove 105a5 on a surface opposite to the liner 4, and is pressed by an annular spring 11 that is fit in the spring groove 105a5 toward the liner 4 in such a manner as to be constricted. The lip part 105a4 is pressed by the spring 111 so that a sliding contact part 105a6 is elastically deformed for a sliding contact with the outer circumferential surface of the liner 4.

Thus, the first seal ring 105a has the key part 105a1 held between the second split housing 102b and the third split housing 102c, and the sliding contact part 105a6 of the lip part 105a4 is in sliding contact with the outer circumferential surface of the liner 4.

The second seal ring 105b, the third seal ring 105c, and the fourth seal ring 105d have the same shapes as the first seal ring 105a, each of which is held by the housing 102 for a sliding contact with the outer circumferential surface of the liner 4.

As illustrated in FIG. 2, the second seal ring 105b has, in the same way as the first seal ring 105a, a key part fit in and held by the annular groove formed between the third split housing 102c and the fourth split housing 102d, and has a lip part that is in sliding contact with the outer circumferential surface of the liner 4. The fourth split housing 102d has a backup ring formed to support a heel part and an arm part of the second seal ring 105b.

Also, the third seal ring 105c has a key part fit in and held by the annular groove formed between the fourth split housing 102d and the fifth split housing 102e, and has a lip part that is in sliding contact with the outer circumferential surface of the liner 4. The fifth split housing 102e has a backup ring formed to support a heel part and an arm part of the third seal ring 105c.

Each of the first seal ring 105a, the second seal ring 105b, and the third seal ring 105c has the arm part extending toward the stern side from the heel part, and has the lip part that is in sliding contact with the liner 4 on the stern-side of the key part held by the housing 102.

The fourth seal ring 105d has a key part fit in and held by the annular groove formed between the fifth split housing 102e and the sixth split housing 102f, and has a lip part that is in sliding contact with the outer circumferential surface of the liner 4. The fifth split housing 102e has a backup ring formed to support a heel part and an arm part of the fourth seal ring 105d.

The fourth seal ring 105d has the arm part extending on the stern-side from the heel part, and has the lip part that is in sliding contact with the liner 4 on the stern-side of the key part held by the housing 102.

### (First air chamber)

A first air chamber 107a is formed between the first seal ring 105a and the second seal ring 105b. Air having an air pressure adjusted to be greater than or equal to the sea water pressure on the stern-side of the first seal ring 105a is supplied to the first air chamber 107a at a constant flow rate from the flow controller of the air conditioning unit 110 through the second air supply passage 121b.

The air supplied to the first air chamber 107a flows out toward the fishing net avoidance ring 106 through between the lip part 105a4 of the first seal ring 105a and the liner 4 by lifting the arm part 105a3 extending on the stern-side against the sea water pressure. The air flowing out from the first air chamber 107a is discharged to the outside of the stern-side seal apparatus 101a through the air hole 102b1 formed in the second split housing 102b.

As a result of the air pressure in the first air chamber 107a being greater than or equal to the sea water pressure, sea water is prevented from entering the inside of the first air chamber 107a from between the lip part of the first seal ring 105a and the liner 4. If sea water or lubricant oil enters the first air chamber 107a, the sea water or the lubricant oil that has entered the first air chamber 107a is discharged through the discharge passage 152, and is collected in the discharge unit 151.

### (Second air chamber)

A second air chamber 107b is formed between the second seal ring 105b and the third seal ring 105c. In the same way as the first air chamber 107a, air having an air pressure adjusted to be greater than or equal to the sea water pressure on the stern-side of the first seal ring 105a is supplied to the second air chamber 107b at a constant flow rate from the flow controller of the air conditioning unit 110 through the first air supply passage 121a.

The air supplied to the second air chamber 107b flows to the first air chamber 107a, from which air flows out and decreases in pressure to be lower than the second air chamber 107b, and ultimately flows toward the fishing net avoidance ring 106 through between the first air chamber 107a and the liner 4 to be discharged through the air hole 102b1.

Note that, in a state where the third seal ring 105c functions normally, it is also possible to close the valve V2 to not supply air to the first air chamber 107a, and to supply air only to the second air chamber 107b. Also, when the third seal ring 105c has a failure, the valve V1 is closed to stop supplying air to the second air chamber 107b, and the valve V2 is opened to supply air to the first air chamber 107a.

### (First lubricant oil chamber)

A first lubricant oil chamber 108a is formed between the third seal ring 105c and the fourth seal ring 105d. Lubricant oil having an oil pressure adjusted to be lower than the sea water pressure on the stern-side of the first seal ring 105a is supplied to the first lubricant oil chamber 108a from the stern-side circulation part 130 through the second circulation passage 132b.

Air having an air pressure adjusted to be greater than or equal to the sea water pressure is supplied to the second air chamber 107b whereas lubricant oil having an oil pressure adjusted to be lower than the sea water pressure is supplied to the first lubricant oil chamber 108a. As a result, a pressure is applied to the third seal ring 105c in a direction from the second air chamber 107b that is a high pressure side to the first lubricant oil chamber 108a that is a low pressure side, and the arm part extending toward the stern side and the lip part is pressed toward the liner 4. As the third seal ring 105c is pressed by the differential pressure, the lip part is pressed onto the liner 4 to seal between the second air chamber 107b and the first lubricant oil chamber 108a. Thus, the third seal ring 105c seals between the second air chamber 107b and the first lubricant oil chamber 108a to prevent lubricant oil from leaking from the first lubricant oil chamber 108a to the second air chamber 107b.

Because lubricant oil that is supplied is sealed in the first lubricant oil chamber 108a by the third seal ring 105c, the oil pressure inside the chamber is greater than or equal to the oil pressure of the lubricant oil inside the stern tube 10. As a result, the lubricant oil supplied to the first lubricant oil chamber 108a flows out toward the stern tube 10 through between the fourth seal ring 105d and the liner 4.

The lubricant oil flowing out from the first lubricant oil chamber 108a to the stern tube 10 circulates in such a manner as to return to the lubricant oil tank 131 through the stern-side circulation passage 132 together with the lubricant oil supplied to the stern tube 10, and to be again supplied to the stern tube 10 and the stern-side seal apparatus 101a.

If, for example, the third seal ring 105c has a failure, the second seal ring 105b seals between the first air chamber 107a and the second air chamber 107b filled with lubricant oil to prevent the lubricant oil from leaking to the first air chamber 107a or to the outside of the ship.

In this case, a pressure is applied to the second seal ring 105b in a direction from the first air chamber 107a of a high pressure side to the second air chamber 107b filled with lubricant oil to be a low pressure side, and the arm part extending toward the stern side and the lip part are pressed toward the liner 4. As a result of the second seal ring 105b being pressed by the differential pressure, the lip part is pressed onto the liner 4 to seal between the first air chamber 107a and the second air chamber 107b. Thus, the second seal ring 105b seals between the first air chamber 107a and the second air chamber 107b to prevent the lubricant oil that has flowed out to the second air chamber 107b from leaking to the first air chamber 107a.

Also, if the second seal ring 105b has a failure in addition to the third seal ring 105c, the stern-side circulation part 130 increases the oil pressure supplied to the stern tube 10. As a result of the oil pressure of the lubricant oil being increased inside the stern tube 10, a pressure is applied to the fourth seal ring 105d toward the first lubricant oil chamber 108a, and the arm part extending on the stern-side and the lip part are pressed toward the liner 4. As a result of the fourth seal ring 105d being pressed by the differential pressure, the lip part is pressed onto the liner 4 to seal between the inside of the stern tube 10 and the first lubricant oil chamber 108a. As a result of the fourth seal ring 105d thus sealing between the inside of the stern tube 10 and the first lubricant oil chamber 108a, lubricant oil is prevented from leaking from the inside of the stern tube 10 to the outside of the ship.

As mentioned above, according to the stern-side seal apparatus 101a of the present embodiment, even if the third seal ring 105c has a failure, the second seal ring 105b functions as a sea-water-side backup seal ring, and lubricant oil is prevented from leaking to the outside of the ship. Also, even if the second seal ring 105b and the third seal ring 105c have failures, it is possible to prevent lubricant oil from leaking from the inside of the stern tube 10 toward the stern side through the first lubricant oil chamber 108a by increasing the oil pressure of the lubricant oil supplied to the stern tube 10.

### (Stem-side seal apparatus)

The stern-side seal apparatus 101b includes the housing 112, the fifth seal ring 105e, and the sixth seal ring 105f.

### (Housing)

The housing 112 includes a first split housing 112a, a second split housing 112b, and a third split housing 112c, in the stated order from the stern side.

Each of the split housings 112a-112c is a tubular member, and the split housings 112a-112c are fixed to the stern tube 10 in such a manner as to be fit in and sequenced relative to each other. Also, in the same way as the split housings 102a-102f of the stern-side seal apparatus 101a, each of the split housings 112a-112c has an annular groove formed between the split housing and an adjacent split housing, and the annular grooves hold the fifth seal ring 105e and the sixth seal ring 105f.

The housing 112 holds the fifth seal ring 105e between the first split housing 112a and the second split housing 112b, and holds the sixth seal ring 105f between the second split housing 112b and the third split housing 112c.

The second split housing 112b has a stern-side circulation passage 137 through which lubricant oil circulates.

### (Seal ring)

The fifth seal ring 105e and the sixth seal ring 105f have the same configurations as the first seal ring 105a illustrated in FIG. 3, and each of the fifth seal ring 105e and the sixth seal ring 105f has a key part held by the housing 112, and has a lip part that is in sliding contact with the outer circumferential surface of the liner 6.

The fifth seal ring 105e has the key part fit in and held by an annular groove formed between the first split housing 112a and the second split housing 112b, and has the lip part that is in sliding contact with the outer circumferential surface of the liner 6. The second split housing 112b has a backup ring formed to support a heel part and an arm part of the fifth seal ring 105e.

The sixth seal ring 105f has the key part fit in and held by an annular groove formed between the second split housing 112b and the third split housing 112c, and has the lip part that is in sliding contact with the outer circumferential surface of the liner 6.

Each of the fifth seal ring 105e and the sixth seal ring 105f has an arm part extending toward the stern side from a heel part, and has the lip part that is in sliding contact with the liner 6 on the stern side of the key part held by the housing 102.

### (Second lubricant oil chamber)

A second lubricant oil chamber 108b is formed between the fifth seal ring 105e and the sixth seal ring 105f. Lubricant oil having an oil pressure adjusted to be lower than the oil pressure of the lubricant oil supplied to the stern tube 10 and the stern-side seal apparatus 101a is supplied to the second lubricant oil chamber 108b from the stern-side circulation passage 137 of the stern-side circulation part 135.

Because the oil pressure of the lubricant oil inside the stern tube 10 is higher than in the second lubricant oil chamber 108b, a pressure is applied to the fifth seal ring 105e in a direction from the stern tube 10 toward the second lubricant oil chamber 108b, and the arm part extending toward the stern side and the lip part are pressed toward the liner 6. As a result of the fifth seal ring 105e being pressed by the differential pressure, the lip part is pressed onto the liner 6 to seal between the inside of the stern tube 10 and the second lubricant oil chamber 108b. The fifth seal ring 105e thus seals between the inside of the stern tube 10 and the second lubricant oil chamber 108b to prevent lubricant oil from leaking to the inside of the ship.

Note that it is also possible that the stern-side seal apparatus 101b has a single seal configuration such that, for example, the fifth seal ring 105e or the sixth seal ring 105f seals the lubricant oil inside the stern tube 10. By using such a configuration, it is possible to reduce the number of seal rings, and also, the stern-side circulation part 135 that circulates lubricant oil in the second lubricant oil chamber 108b is not needed. As a result, it is possible to simplify the configuration to save space, and also, it is possible to reduce the component cost.

According to the stern tube seal apparatus 101 of the first embodiment, by having the above-mentioned configuration, the stern-side seal apparatus 101a prevents lubricant oil from leaking from the stern tube 10 to the outside of the ship, and the stern-side seal apparatus 101b prevents lubricant oil from leaking from the stern tube 10 to the inside of the ship.

According to the stern-side seal apparatus 101a of the stern tube seal apparatus 101, the two air chambers, i.e., the first air chamber 107a and the second air chamber 107b, separate the outside of the ship from the first lubricant oil chamber 108a. As a result, a likelihood of leakage of lubricant oil to the outside of the ship is reduced.

Also, if the third seal ring 105c has a failure, the second seal ring 105b can be made to function as a sea-water-side backup seal ring, and a likelihood of leakage of lubricant oil to the outside of the ship is further reduced. Further, even if the second seal ring 105b and the third seal ring 105c have failures, the fourth seal ring 105d can be made to function as a lubricant-oil-side backup seal ring, and it is possible to prevent lubricant oil from leaking to the outside of the ship.

### [Second embodiment]

Next, a second embodiment will be described based on drawings. Note that, description of the same elements as those in the embodiment described above will be omitted.

### <Stern tube seal system>

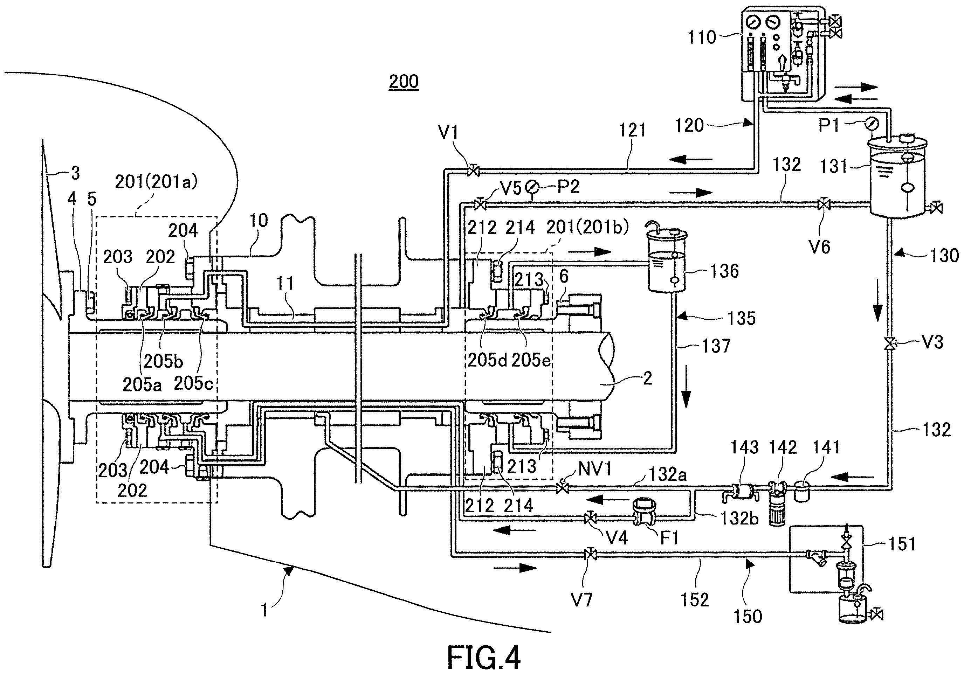

FIG. 4 illustrates a general configuration of a stern tube seal system 200 according to the second embodiment.

As illustrated in FIG. 4, the stern tube seal system 200 includes a stern tube seal apparatus 201, an air supply part 120, a stern-side circulation part 130, a stern-side circulation part 135, and a discharge part 150.

### (Stern tube seal apparatus)

The stern tube seal apparatus 201 includes a stern-side seal apparatus 201a and a stern-side seal apparatus 201b, and prevents lubricant oil supplied between a propeller shaft 2 and a bearing 11 from leaking from a stern tube 10 that covers the propeller shaft 2 to the outside of the ship or to the inside of the ship.

The stern-side seal apparatus 201a includes a housing 202, a first seal ring 205a, a second seal ring 205b, and a third seal ring 205c, and is connected to the stern tube 10 from the stern side.

The housing 202 includes a plurality of tubular members connected together using bolts 203 or the like, and the propeller shaft 2 is inserted in the housing 202. Also, the housing 202 holds a first seal ring 205a, a second seal ring 205b, and a third seal ring 205c, and is connected to the stern tube 10 using bolts 204.

The first seal ring 205a, the second seal ring 205b, and the third seal ring 205c are annular members made of an elastic material, and have respective inner circumferential surfaces that are in sliding contact with the outer circumferential surface of a liner 4.

The stern-side seal apparatus 201b includes a housing 212, a fourth seal ring 205d, and a fifth seal ring 205e.

The housing 212 includes a plurality of tubular members connected together using bolts 213 or the like, and the propeller shaft 2 is inserted in the housing 212. Also, the housing 212 holds a fourth seal ring 205d and a fifth seal ring 205e, and is connected to the stern side of the stern tube 10 using bolts 214.

### (Air supply part)

The air supply part 120 includes an air conditioning unit 110 and an air supply passage 121, and supplies air to the stern-side seal apparatus 201a of the stern tube seal apparatus 201. In detail, the air supply part 120 supplies air having an air pressure adjusted to be greater than or equal to the sea water pressure to between the first seal ring 205a and the second seal ring 205b in the stern-side seal apparatus 201a at a constant flow rate.

### (Lubricant oil circulation part)

The stern tube seal system 200 includes, as a lubricant oil circulation part, a stern-side circulation part 130 and a stern-side circulation part 135.

The stern-side circulation part 130 circulates lubricant oil so as to supply the lubricant oil from a lubricant oil tank 131 to the stern tube 10 and to the stern-side seal apparatus 201a, and again return to the lubricant oil tank 131. The stern-side circulation part 135 circulates lubricant oil so as to supply the lubricant oil from a lubricant oil tank 136 to the stern-side seal apparatus 201b, and again return to the lubricant oil tank 136.

### (Discharge part)

The discharge part 150 collects sea water and lubricant oil, discharged from the stern-side seal apparatus 201a to a discharge passage 152, in a discharge tank of a discharge unit 151.

### <Stern tube seal apparatus>

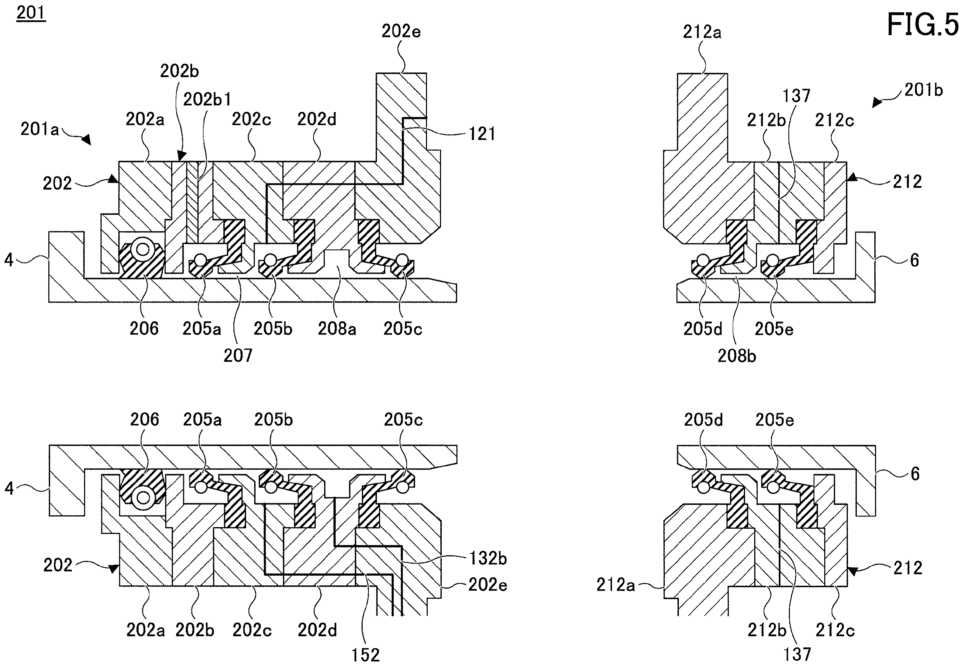

Next, a configuration of the stern tube seal apparatus 201 will be described. FIG. 5 illustrates a general configuration of a stern tube seal apparatus 201 according to the second embodiment.

### (Stern-side seal apparatus)

As illustrated in FIG. 5, the stern-side seal apparatus 201a includes the housing 202, the first seal ring 205a, the second seal ring 205b, the third seal ring 205c, and a fishing net avoidance ring 206.

### (Housing)

The housing 202 has a first split housing 202a, a second split housing 202b, a third split housing 202c, a fourth split housing 202d, and a fifth split housing 202e in the stated order from the stern side.

Each of the split housings 202a-202e is a tubular member, and the split housings 202a-202e are fixed to the stern tube 10 in such a manner as to be fit in and sequenced relative to each other. Also, each of the split housing 202a-202e has an annular groove formed between the split housing and an adjacent split housing, and the annular grooves hold the seal rings 205a-205c and the fishing net avoidance ring 206.

The housing 202 holds the fishing net avoidance ring 206 between the first split housing 202a and the second split housing 202b, and the housing 202 holds the first seal ring 205a between the second split housing 202b and the third split housing 202c. Also, the housing 202 holds the second seal ring 205b between the third split housing 202c and the fourth split housing 202d, and the housing 202 holds the third seal ring 205c between the fourth split housing 202d and the fifth split housing 202e.

The second split housing 202b has an air hole 202b1 formed therein to discharge air supplied to the stern-side seal apparatus 201a. The third split housing 202c, the fourth split housing 202d, and the fifth split housing 202e have an air supply passage 121 formed therein.

The fourth split housing 202d and the fifth split housing 202e have a second circulation passage 132b formed therein. Also, the third split housing 202c, the fourth split housing 202d, and the fifth split housing 202e have a discharge passage 152 formed therein.

### (Seal ring)

The seal rings 205a-205c are annular members made of an elastic material such as a rubber, and each of the seal rings 205a-205c are held by the housing 202 for a sliding contact with the outer circumferential surface of the liner 4. The seal rings 205a-205c have the same configurations as the configuration of the first seal ring 105a illustrated in FIG. 3.

The first seal ring 205a has a key part that is fit in and held by the annular groove formed between the second split housing 202b and the third split housing 202c, and has a lip part that is in sliding contact with the outer circumferential surface of the liner 4. The third split housing 202c has a backup ring formed to support a heel part and an arm part of the first seal ring 205a.

The second seal ring 205b has a key part that is fit in and held by the annular groove formed between the third split housing 202c and the fourth split housing 202d, and has a lip part that is in sliding contact with the outer circumferential surface of the liner 4. The fourth split housing 202d has a backup ring formed to support a heel part and an arm part of the second seal ring 205b.

Each of the first seal ring 205a and the second seal ring 205b has the arm part extending toward the stern side from the heel part, and has the lip part that is in sliding contact with the liner 4 on the stern side of the key part held by the housing 202.

The third seal ring 205c has a key part that is fit in and held by the annular groove formed between the fourth split housing 202d and the fifth split housing 202e, and has a lip part that is in sliding contact with the outer circumferential surface of the liner 4. The fourth split housing 202d has a backup ring formed to support a heel part and an arm part of the third seal ring 205c.

The third seal ring 205c has the arm part extending on the stern-side from the heel part, and has the lip part that is in sliding contact with the liner 4 on the stern-side of the key part held by the housing 202.

### (Air chamber)

An air chamber 207 is formed between the first seal ring 205a and the second seal ring 205b. Air having an air pressure adjusted to be greater than or equal to the sea water pressure on the stern-side of the first seal ring 205a is supplied to the air chamber 207 at a constant flow rate from a flow controller of the air conditioning unit 110 through the air supply passage 121.

As a result of the air having the air pressure greater than or equal to sea water pressure being supplied to the air chamber 207, sea water is prevented from flowing in from between the lip part of the first seal ring 205a and the liner 4 to the air chamber 207. Sea water or lubricant oil having entered the air chamber 207 is discharged through the discharge passage 152 and is collected by the discharge unit 151.

### (First lubricant oil chamber)

A first lubricant oil chamber 208a is formed between the second seal ring 205b and the third seal ring 205c. Lubricant oil having an oil pressure adjusted to be lower than the sea water pressure on the stern-side of the first seal ring 205a is supplied to the first lubricant oil chamber 208a from the stern-side circulation part 130 through the second circulation passage 132b.

Thus, the first lubricant oil chamber 208a has an oil pressure lower than the sea water pressure, and the air chamber 207 has an air pressure greater than or equal to the sea water pressure. As a result, a pressure is applied to the second seal ring 205b in a direction from the air chamber 207 that is a high pressure side to the first lubricant oil chamber 208a that is a low pressure side, and the arm part extending toward the stern side and the lip part are pressed onto the liner 4. As a result of the second seal ring 205b being pressed by the differential pressure, the lip part is pressed onto the liner 4 to seal between the air chamber 207 and the first lubricant oil chamber 208a. The second seal ring 205b thus seals between the air chamber 207 and the first lubricant oil chamber 208a to prevent lubricant oil from leaking from the first lubricant oil chamber 208a to the air chamber 207.

Because lubricant oil that is supplied is sealed in the first lubricant oil chamber 208a by the second seal ring 205b, the oil pressure inside the chamber is greater than or equal to the oil pressure of the lubricant oil inside the stern tube 10. As a result, the lubricant oil supplied to the first lubricant oil chamber 208a flows out toward the stern tube 10 through between the third seal ring 205c and the liner 4.

If the second seal ring 205b has a failure, the settings in the air conditioning unit 110 are adjusted in such a manner as to increase the oil pressure supplied from the stern-side circulation part 130 to the stern tube 10. As a result of the oil pressure of the lubricant oil increasing in the inside of the stern tube 10, a pressure is applied to the third seal ring 205c toward the first lubricant oil chamber 208a, and the arm part extending on the stern-side and the lip part are pressed toward the liner 4. As a result of the third seal ring 205c being thus pressed by the differential pressure, the lip part is pressed onto the liner 4 to seal between the inside of the stern tube 10 and the first lubricant oil chamber 208a. The third seal ring 205c thus seals between the inside of the stern tube 10 and the first lubricant oil chamber 208a to prevent lubricant oil from leaking from the inside of the stern tube 10 to the outside of the ship.

Thus, according to the stern-side seal apparatus 201a of the present embodiment, even if the second seal ring 205b has a failure, it is possible to prevent lubricant oil from leaking to the outside of the ship from the stern tube 10 through the first lubricant oil chamber 208a by increasing the oil pressure of the lubricant oil supplied to the stern tube 10.

### (Stem-side seal apparatus)

The stern-side seal apparatus 201b includes the housing 212, the fourth seal ring 205d, and the fifth seal ring 205e. The stern-side seal apparatus 201b according to the second embodiment has the same configuration as that of the stern-side seal apparatus 101b according to the first embodiment. In the stern-side seal apparatus 201b according to the second embodiment, a second lubricant oil chamber 208b is formed, and lubricant oil is prevented from leaking from the stern tube 10 to the inside of the ship.

According to the stern tube seal apparatus 201 of the second embodiment, because of the above-mentioned configuration, the stern-side seal apparatus 201a prevents lubricant oil from leaking from the stern tube 10 to the outside of the ship, and the stern-side seal apparatus 201b prevents lubricant oil from leaking to the inside of the ship.

In the stern-side seal apparatus 201a of the stern tube seal apparatus 201, sea water and lubricant oil are separated by the air chamber, and a likelihood that lubricant oil leaks to the outside of the ship is reduced. Also, even if the second seal ring 205b has a failure, the third seal ring 205c is made to function as a lubricant-oil-side backup seal ring, and it is possible to prevent lubricant oil from leaking to the outside of the ship. By using such a configuration, leakage of lubricant oil from the stern tube 10 to the outside of the ship is further reduced.

### [Third embodiment]

Next, a third embodiment will be described based on drawings. Note that, description of the same elements as those in the embodiments described above will be omitted.

### <Stern tube seal system>

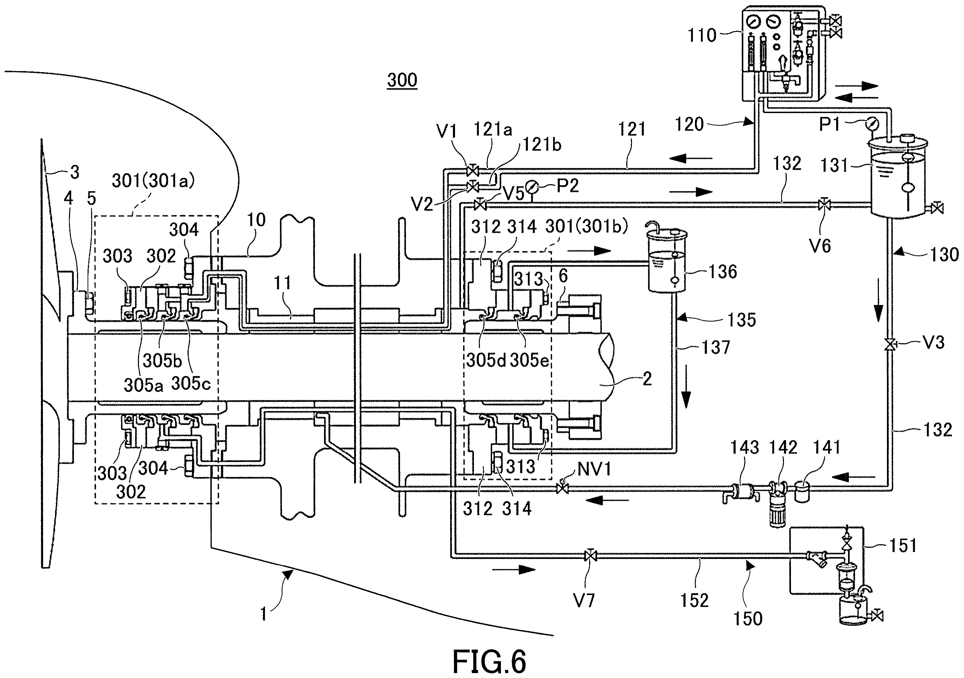

FIG. 6 illustrates a general configuration of a stern tube seal system 300 according to the third embodiment.

As illustrated in FIG. 6, the stern tube seal system 300 includes a stern tube seal apparatus 301, an air supply part 120, a stern-side circulation part 130, a stern-side circulation part 135, and a discharge part 150.

### (Stern tube seal apparatus)

The stern tube seal apparatus 301 includes a stern-side seal apparatus 301a and a stern-side seal apparatus 301b, and prevents lubricant oil supplied to between a propeller shaft 2 and a bearing 11 from leaking from a stern tube 10 that covers the propeller shaft 2 to the outside of the ship or to the inside of the ship.

The stern-side seal apparatus 301a includes a housing 302, a first seal ring 305a, a second seal ring 305b, and a third seal ring 305c, and is connected to the stern side of the stern tube 10.

The housing 302 includes a plurality of tubular members connected together using bolts 303 or the like, and the propeller shaft 2 is inserted in the housing 302. Also, the housing 302 holds the first seal ring 305a, the second seal ring 305b, and the third seal ring 305c, and is connected to the stern tube 10 from the outside of the ship using bolts 304.

The first seal ring 305a, the second seal ring 305b, and the third seal ring 305c are annular members made of an elastic material, and have respective inner circumferential surfaces that are in sliding contact with the outer circumferential surface of a liner 4.

The stern-side seal apparatus 301b includes a housing 312, a fourth seal ring 305d, and a fifth seal ring 305e, and is connected to the stern side of the stern tube 10.

The housing 312 includes a plurality of tubular members connected together using bolts 313 or the like, and the propeller shaft 2 is inserted in the housing 312. Also, the housing 312 holds the fourth seal ring 305d and the fifth seal ring 305e, and is connected to the stern side of the stern tube 10 using bolts 314.

The fourth seal ring 305d and the fifth seal ring 305e are annular members made of an elastic material, and have respective inner circumferential surfaces that are in sliding contact with the outer circumferential surface of a liner 6.

### (Air supply part)

The air supply part 120 includes an air conditioning unit 110 and an air supply passage 121, and supplies air to the stern-side seal apparatus 301a of the stern tube seal apparatus 301. In detail, the air supply part 120 supplies air having an air pressure adjusted to be greater than or equal to the sea water pressure, to between the first seal ring 305a and the second seal ring 305b and to between the second seal ring 305b and the third seal ring 305c in the stern-side seal apparatus 301a at a constant flow rate.

### (Lubricant oil circulation part)

The stern tube seal system 300 includes, as a lubricant oil circulation part, a stern-side circulation part 130 and a stern-side circulation part 135.

The stern-side circulation part 130 circulates lubricant oil so as to supply the lubricant oil from a lubricant oil tank 131 to the stern tube 10 and again return to the lubricant oil tank 131. The stern-side circulation part 135 circulates lubricant oil so as to supply the lubricant oil from a lubricant oil tank 136 to the stern-side seal apparatus 301b, and again return to the lubricant oil tank 136.

### (Discharge part)

The discharge part 150 collects sea water and lubricant oil, discharged from the stern-side seal apparatus 301a to a discharge passage 152, in a discharge tank of a discharge unit 151.

### <Stern tube seal apparatus>

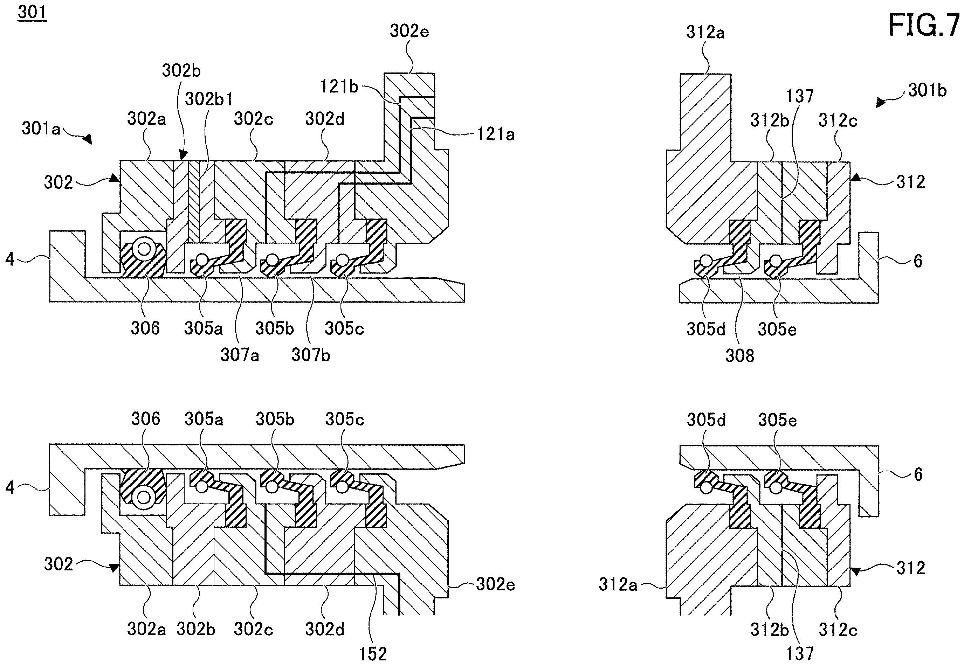

Next, a configuration of the stern tube seal apparatus 301 will be described. FIG. 7 illustrates a general configuration of the stern tube seal apparatus 301 according to the third embodiment.

### (Stern-side seal apparatus)

As illustrated in FIG. 7, the stern-side seal apparatus 301a includes the housing 302, the first seal ring 305a, the second seal ring 305b, the third seal ring 305c, and a fishing net avoidance ring 306.

### (Housing)

The housing 302 has a first split housing 302a, a second split housing 302b, a third split housing 302c, a fourth split housing 302d, and a fifth split housing 302e in the stated order from the stern side.

Each of the split housings 302a-302e is a tubular member, and the split housings 302a-302e are fixed to the stern tube 10 in such a manner as to be fit in and sequenced relative to each other. Also, each of the split housing 302a-302e has an annular groove formed between the split housing and an adjacent split housing, and the annular grooves hold the seal rings 305a-305c and the fishing net avoidance ring 306.

The housing 302 holds the fishing net avoidance ring 306 between the first split housing 302a and the second split housing 302b, and the housing 302 holds the first seal ring 305a between the second split housing 302b and the third split housing 302c. Also, the housing 302 holds the second seal ring 305b between the third split housing 302c and the fourth split housing 302d, and the housing 302 holds the third seal ring 305c between the fourth split housing 302d and the fifth split housing 302e.

The second split housing 302b has an air hole 302b1 formed therein to discharge air supplied to the stern-side seal apparatus 301a. The fourth split housing 302d and the fifth split housing 302e have a first air supply passage 121a formed therein. The third split housing 302c, the fourth split housing 302d, and the fifth split housing 302e have a second air supply passage 121b formed therein. Also, the third split housing 302c, the fourth split housing 303d, and the fifth split housing 302e have a discharge passage 152 formed therein.

### (Seal ring)

The seal rings 305a-305c are annular members made of an elastic material such as a rubber, and each of the seal rings 305a-305c is held by the housing 302 for a sliding contact with the outer circumferential surface of the liner 4. The seal rings 305a-305c have the same configurations as the configuration of the first seal ring 105a illustrated in FIG. 3.

The first seal ring 305a has a key part that is fit in and held by the annular groove formed between the second split housing 302b and the third split housing 302c, and has a lip part that is in sliding contact with the outer circumferential surface of the liner 4. The third split housing 302c has a backup ring formed to support a heel part and an arm part of the first seal ring 305a.

The second seal ring 305b has a key part that is fit in and held by the annular groove formed between the third split housing 302c and the fourth split housing 302d, and has a lip part that is in sliding contact with the outer circumferential surface of the liner 4. The fourth split housing 302d has a backup ring formed to support a heel part and an arm part of the second seal ring 305b.

Also, the third seal ring 305c has a key part that is fit in and held by the annular groove formed between the fourth split housing 302d and the fifth split housing 302e, and has a lip part that is in sliding contact with the outer circumferential surface of the liner 4. The fifth split housing 302e has a backup ring formed to support a heel part and an arm part of the third seal ring 305c.

Each of the first seal ring 305a, the second seal ring 305b, and the third seal ring 305c has the arm part extending toward the stern side from the heel part, and has the lip part that is in sliding contact with the liner 4 on the stern side of the key part held by the housing 302.

### (First air chamber)

A first air chamber 307a is formed between the first seal ring 305a and the second seal ring 305b. Air having an air pressure adjusted to be greater than or equal to the sea water pressure on the stern side of the first seal ring 305a is supplied to the first air chamber 307a at a constant flow rate from a flow controller of the air conditioning unit 110 through the second air supply passage 121b.

The air supplied to the first air chamber 307a flows out toward the fishing net avoidance ring 306 through between the lip part of the first seal ring 305a and the liner 4, by lifting the arm part extending toward the stern side against the sea water pressure. The air flowing out from the first air chamber 307a is discharged to the outside of the stern-side seal apparatus 301a through the air hole 302b1 formed in the second split housing 302b.

Also, as a result of the air pressure in the first air chamber 307a being greater than or equal to the sea water pressure, sea water is prevented from entering the inside of the first air chamber 307a from between the lip part of the first seal ring 305a and the liner 4. If sea water or lubricant oil enters the first air chamber 307a, the sea water or the lubricant oil that has entered the first air chamber 307a is discharged through the discharge passage 152, and is collected in the discharge unit 151.

### (Second air chamber)

A second air chamber 307b is formed between the second seal ring 305b and the third seal ring 305c. In the same way as the first air chamber 307a, air having an air pressure adjusted to be greater than or equal to the sea water pressure on the stern side of the first seal ring 305a is supplied to the second air chamber 307b at a constant flow rate from the flow controller of the air conditioning unit 110 through the first air supply passage 121a.

The air supplied to the second air chamber 307b flows to the first air chamber 307a, from which air flows out and decreases in pressure to be lower than the second air chamber 307b, and ultimately flows toward the fishing net avoidance ring 306 through between the first air chamber 307a and the liner 4 to be discharged through the air hole 302b1.

Note that, in a state where the third seal ring 305c functions normally, it is also possible to close a valve V2 to not supply air to the first air chamber 307a, and to supply air only to the second air chamber 307b. When the third seal ring 305c has a failure, a valve V1 is closed to stop supplying air to the second air chamber 307b, and the valve V2 is opened to supply air to the first air chamber 307a.

The inside of the stern tube 10 has an oil pressure lower than the sea water pressure, and the second air chamber 307b has an air pressure greater than or equal to the sea water pressure. As a result, a pressure is applied to the third seal ring 305c in a direction from the second air chamber 307b that is a high-pressure side to the stern tube 10 that is a low-pressure side. As a result of being pressed by the differential pressure, the third seal ring 305c seals between the second air chamber 307b and the stern tube 10 to prevent lubricant oil from leaking from the stern tube 10 to the second air chamber 307b.

For example, if the third seal ring 305c has a failure, the second seal ring 305b seals between the first air chamber 307a and the second air chamber 307b filled with lubricant oil, to prevent the lubricant oil from leaking to the first air chamber 307a and to the outside of the ship.

In this case, a pressure is applied to the second seal ring 305b in a direction from the first air chamber 307a that is a high-pressure side to the second air chamber 307b that is filled with the lubricant oil to be a low-pressure side, and the arm part extending toward the stern side and the lip part are pressed toward the liner 4. As a result of the second seal ring 305b being pressed by the differential pressure, the lip part is pressed onto the liner 4 to seal between the first air chamber 307a and the second air chamber 307b. As a result of the second seal ring 305b sealing between the first air chamber 307a and the second air chamber 307b, the lubricant oil having flowed into the second air chamber 307b is prevented from leaking to the first air chamber 307a.

Thus, according to the stern-side seal apparatus 301a of the present embodiment, even if the third seal ring 305c has a failure, the second seal ring 305b functions as a sea-water-side backup seal ring whereby lubricant oil is prevented from leaking to the outside of the ship.

### (Stem-side seal apparatus)

The stern-side seal apparatus 301b includes the housing 312, the fourth seal ring 305d, and the fifth seal ring 305e. The stern-side seal apparatus 301b according to the third embodiment has the same configuration as that of the stern-side seal apparatus 101b according to the first embodiment, and has a lubricant oil chamber 308 formed to prevent lubricant oil from leaking from the stern tube 10 to the inside of the ship.

According to the stern tube seal apparatus 301 of the third embodiment, because of the above-mentioned configuration, the stern-side seal apparatus 301a prevents lubricant oil from leaking from the stern tube 10 to the outside of the ship, and the stern-side seal apparatus 301b prevents lubricant oil from leaking to the inside of the ship.

In the stern-side seal apparatus 301a of the stern tube seal apparatus 301, sea water and lubricant oil are separated by the air chambers, and a likelihood that lubricant oil leaks to the outside of the ship is reduced. Also, even if the third seal ring 305c has a failure, the second seal ring 305b is made to function as a sea-water-side backup seal ring, and it is possible to prevent lubricant oil from leaking to the outside of the ship. By using such a configuration, leakage of lubricant oil from the stern tube 10 to the outside of the ship is further reduced.

### [Fourth embodiment]

Next, a fourth embodiment will be described based on drawings. Note that, description of the same elements as those in the embodiments described above will be omitted.

### <Stern tube seal system>

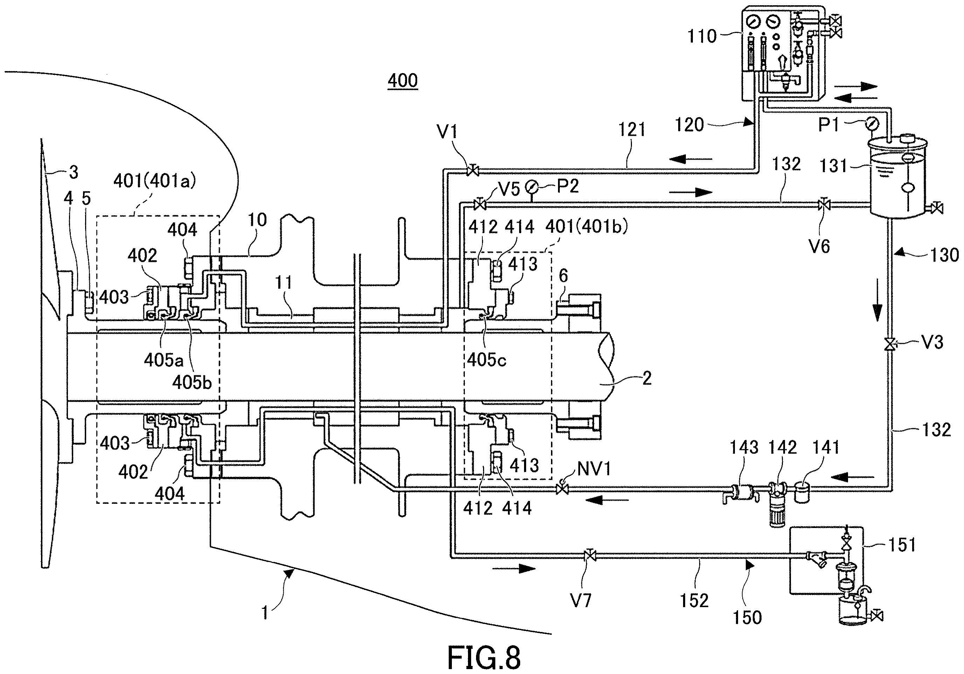

FIG. 8 illustrates a general configuration of a stern tube seal system 400 according to the fourth embodiment.

As illustrated in FIG. 8, the stern tube seal system 400 includes a stern tube seal apparatus 401, an air supply part 120, a stern-side circulation part 130, and a discharge part 150.

### (Stern tube seal apparatus)

The stern tube seal apparatus 401 includes a stern-side seal apparatus 401a and a stern-side seal apparatus 401b, and prevents lubricant oil supplied to between a propeller shaft 2 and a bearing 11 from leaking from a stern tube 10 that covers the propeller shaft 2 to the outside of the ship or to the inside of the ship.

The stern-side seal apparatus 401a includes a housing 402, a first seal ring 405a and a second seal ring 405b, and is connected to the stern side of the stern tube 10.

The housing 402 includes a plurality of tubular members connected together using bolts 403 or the like, and the propeller shaft 2 is inserted in the housing 402. Also, the housing 402 holds the first seal ring 405a and the second seal ring 405b, and is connected to the stern tube 10 from the outside of the ship using bolts 404.

The first seal ring 405 and the second seal ring 405b are annular members made of an elastic material, and have respective inner circumferential surfaces that are in sliding contact with the outer circumferential surface of a liner 4.

The stern-side seal apparatus 401b includes a housing 312 and a third seal ring 405c, and is connected to the stern side of the stern tube 10.

The housing 412 includes a plurality of tubular members connected together using bolts 413 or the like, and the propeller shaft 2 is inserted in the housing 412. Also, the housing 412 holds the third seal ring 405c, and is connected to the stern tube 10 using bolts 414. The third seal ring 405c is an annular member made of an elastic material, and has an inner circumferential surface that is in sliding contact with the outer circumferential surface of a liner 6.

### (Air supply part)

The air supply part 120 includes an air conditioning unit 110 and an air supply passage 121, and supplies air to the stern-side seal apparatus 401a of the stern tube seal apparatus 401. In detail, the air supply part 120 supplies air having an air pressure adjusted to be greater than or equal to the sea water pressure, to between the first seal ring 405a and the second seal ring 405b in the stern-side seal apparatus 401a at a constant flow rate.

### (Lubricant oil circulation part)

The stern tube seal system 400 includes a stern-side circulation part 130 as a lubricant oil circulation part.

The stern-side circulation part 130 includes an air conditioning unit 110, a lubricant oil tank 131, and a stern-side circulation passage 132. The stern-side circulation part 130 circulates lubricant oil to supply the lubricant oil from the lubricant oil tank 131 to the stern tube 10, and again return to the lubricant oil tank 131.

### (Discharge part)

The discharge part 150 collects sea water and lubricant oil, discharged from the stern-side seal apparatus 401a to a discharge passage 152, in a discharge tank of a discharge unit 151.

### <Stern tube seal apparatus>

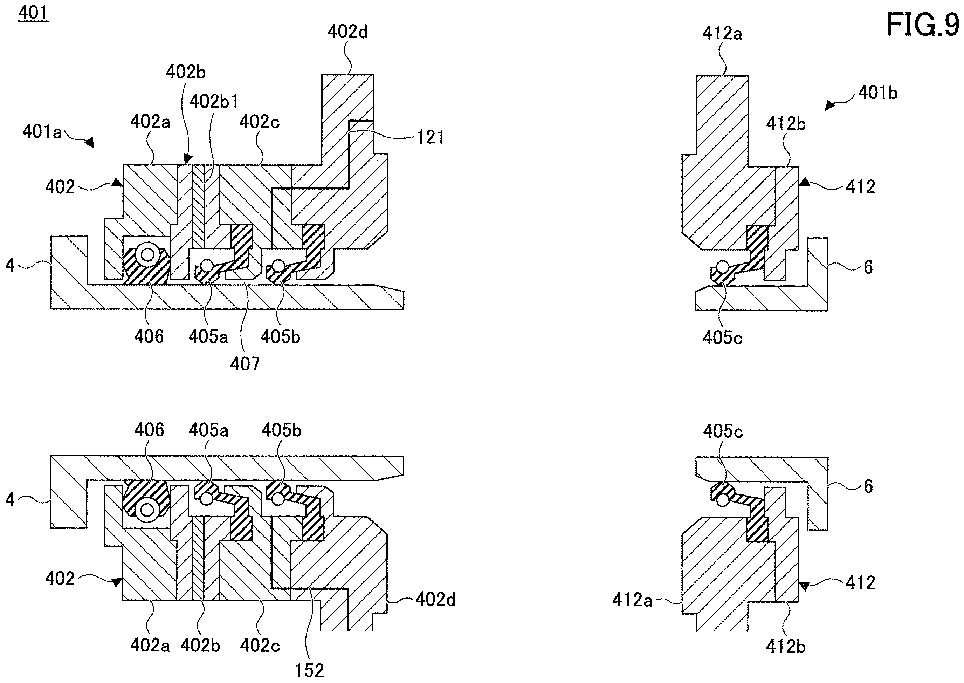

Next, a configuration of the stern tube seal apparatus 401 will be described. FIG. 9 illustrates a general configuration of the stern tube seal apparatus 401 according to the fourth embodiment.

### (Stern-side seal apparatus)

As illustrated in FIG. 9, the stern-side seal apparatus 401a includes the housing 402, the first seal ring 405a, the second seal ring 405b, and a fishing net avoidance ring 406.

### (Housing)

The housing 402 has a first split housing 402a, a second split housing 402b, a third split housing 402c, and a fourth split housing 402d in the stated order from the stern side.

Each of the split housings 402a-402d is a tubular member, and the split housings 402a-402d are fixed to the stern tube 10 in such a manner as to be fit in and sequenced relative to each other. Also, each of the split housing 402a-402d has an annular groove formed between the split housing and an adjacent split housing, and the annular grooves hold the first seal ring 405a, the second seal ring 405b, and the fishing net avoidance ring 406.

The housing 402 holds the fishing net avoidance ring 406 between the first split housing 402a and the second split housing 402b. Also, the housing 402 holds the first seal ring 405a between the second split housing 402b and the third split housing 402c, and the housing 402 holds the second seal ring 405b between the third split housing 402c and the fourth split housing 402d.

The second split housing 402b has an air hole 402b1 formed therein to discharge air supplied to the stern-side seal apparatus 401a. The third split housing 402c and the fourth split housing 402d have an air supply passage 121 and a discharge passage 152 formed therein.

### (Seal ring)

The first seal ring 405a and the second seal ring 405b are annular members made of an elastic material such as a rubber, and each of the seal rings 405a and 405b is held by the housing 402 for a sliding contact with the outer circumferential surface of the liner 4. The first seal ring 405a and the second seal ring 405b have the same configurations as the configuration of the first seal ring 105a illustrated in FIG. 3.

The first seal ring 405a has a key part that is fit in and held by the annular groove formed between the second split housing 402b and the third split housing 402c, and has a lip part that is in sliding contact with the outer circumferential surface of the liner 4. The third split housing 402c has a backup ring formed to support a heel part and an arm part of the first seal ring 405a.

The second seal ring 405b has a key part that is fit in and held by the annular groove formed between the third split housing 402c and the fourth split housing 402d, and has a lip part that is in sliding contact with the outer circumferential surface of the liner 4. The fourth split housing 402d has a backup ring formed to support a heel part and an arm part of the second seal ring 405b.

Each of the first seal ring 405a and the second seal ring 405b has the arm part extending toward the stern side from the heel part, and has the lip part that is in sliding contact with the liner 4 on the stern side of the key part held by the housing 402.

### (Air chamber)

An air chamber 407 is formed between the first seal ring 405a and the second seal ring 405b. Air having an air pressure adjusted to be greater than or equal to the sea water pressure on the stern side of the first seal ring 405a is supplied to the air chamber 407 at a constant flow rate from a flow controller of the air conditioning unit 110 through the air supply passage 121.

The air supplied to the air chamber 407 flows out toward the fishing net avoidance ring 406 through between the lip part of the first seal ring 405a and the liner 4 by lifting the arm part extending toward the stern side against the sea water pressure. The air flowing out from the air chamber 407 is discharged to the outside of the stern-side seal apparatus 401a through the air hole 402b1 formed in the second split housing 402b.

As a result of the air pressure in the air chamber 407 being greater than or equal to the sea water pressure, sea water is prevented from entering the inside of the air chamber 407 from between the lip part of the first seal ring 405a and the liner 4.

The inside of the stern tube 10 has an oil pressure lower than the sea water pressure, and the air chamber 407 has an air pressure greater than or equal to the sea water pressure. As a result, a pressure is applied to the second seal ring 405b in a direction from the air chamber 407 that is a high-pressure side to the stern tube 10 that is a low-pressure side, and the arm part extending toward the stern side and the lip part are pressed onto the liner 4. As a result of the second seal ring 405b being pressed by the differential pressure, the lip part is pressed onto the liner 4 to seal between the air chamber 407 and the stern tube 10. As a result of the second seal ring 405b sealing between the air chamber 407 and the stern tube 10, lubricant oil is prevented from leaking from the stern tube 10 to the air chamber 407.

### (Stem-side seal apparatus)

The stern-side seal apparatus 401b includes the housing 412 and the third seal ring 405c.

The housing 412 holds the third seal ring 405c between the first split housing 412a and the second split housing 412b.

The third seal ring 405c has the same configuration as the configuration of the first seal ring 105a illustrated in FIG. 3. The third seal ring 405c has a key part that is fit in and held by the annular groove formed between the first split housing 412a and the second split housing 412b, and has a lip part that is in sliding contact with the outer circumferential surface of the liner 6. The third seal ring 405c has the arm part extending toward the stern side from the heel part, and has the lip part that is in sliding contact with the liner 4 on the stern side of the key part held by the housing 402.

A pressure is applied to the third seal ring 405c in a direction from the lubricant oil inside the stern tube 10 to the inside of the ship, and the arm part extending toward the stern side and the lip part are pressed toward the liner 6. As a result of the third seal ring 405c being pressed by the differential pressure, the lip part is pressed onto the liner 6 to seal the lubricant oil inside the stern tube 10. As a result of the third seal ring 405c sealing the lubricant oil inside the stern tube 10, the lubricant oil is prevented from leaking to the inside of the ship.

According to the stern tube seal apparatus 401 of the fourth embodiment, by using the above-mentioned configuration, the stern-side seal apparatus 401a prevents lubricant oil from leaking from the stern tube 10 to the outside of the ship, and the stern-side seal apparatus 401b prevents lubricant oil from leaking to the inside of the ship.

According to the stern tube seal apparatus 401 of the fourth embodiment, it is possible to prevent lubricant oil from leaking to the outside of the ship with a simple configuration using two stern-side seal rings and one stern-side seal ring. Also, the stern tube seal apparatus 401 does not need to have a lubricant oil tank, a stern-side circulation passage, and so forth for lubricating the stern-side seal apparatus 401b with lubricant oil, and therefore, it is possible to save space and reduce the cost of the whole system.

Thus, the stern tube seal systems, the stern tube seal apparatuses, the ships, and the stern tube seal methods according to the embodiments have been described. However, the present invention is not limited to the above-mentioned embodiments, and it is possible to modify or improve the embodiments in various ways within the scope of the present invention.

### DESCRIPTION OF REFERENCE NUMERALS

- 1: ship
- 2: propeller shaft
- 3: propeller
- 4, 6: liners
- 10: stern tube
- 100, 200, 300, 400: stern tube seal systems
- 101, 201, 301, 401: stern tube seal apparatuses
- 102, 202, 302, 402: housings
- 105, 205, 305, 405: seal rings
- 105a1: key part
- 105a2: heel part
- 105a3: arm part
- 105a4: lip part
- 107a, 307a: first air chambers
- 107b, 307b: second air chambers
- 108a, 208a: first lubricant oil chambers
- 110: air conditioning unit
- 120: air supply part
- 121: air supply passage
- 121a: first air supply passage
- 121b: second air supply passage
- 130: stern-side circulation part
- 131: lubricant oil tank
- 132: stern-side circulation passage
- 132a: first circulation passage
- 132b: second circulation passage
- 150: discharge part
- 151: discharge unit
- 152: discharge passage
- 207, 407: air chambers
- 208b: second lubricant oil chamber
- 308: lubricant oil chamber

## Claims

1. A stern tube seal system, preventing lubricant oil from flowing out from a stern tube that covers a propeller shaft, the stern tube seal system comprising:
a tubular housing configured to have the propeller shaft inserted therethrough;
a first seal ring configured to be supported by the housing and to be in sliding contact with an outer circumferential surface of a liner that externally fits on the propeller shaft;
a second seal ring configured to be supported by the housing on a stern side of the first seal ring and to be in sliding contact with the outer circumferential surface of the liner to form a first air chamber between the first seal ring and the second seal ring;
an air supply part configured to supply air to the first air chamber at an air pressure greater than or equal to a sea water pressure that is on a stern side of the first seal ring; and
a lubricant oil circulation part configured to circulate the lubricant oil in the stern tube at an oil pressure lower than the sea water pressure.

2. The stern tube seal system as claimed in claim 1, wherein
the first seal ring and the second seal ring are configured to have lip parts that are in sliding contact with the outer circumferential surface of the liner, and to have the lip parts on stern sides of key parts held by the housing.

3. The stern tube seal system as claimed in claim 1 or 2, comprising
a discharge part configured to discharge sea water and the lubricant oil that have entered the first air chamber.

4. The stern tube seal system as claimed in any one of claims 1-3, comprising
a third seal ring configured to be supported by the housing on a stem side of the first seal ring and the second seal ring and to be in sliding contact with the outer circumferential surface of the liner to form a second air chamber between the second seal ring and the third seal ring, wherein
the air supply part is configured to supply air to the second air chamber at an air pressure greater than or equal to the sea water pressure that is on the stern side of the first seal ring.

5. The stern tube seal system as claimed in claim 4, wherein
the third seal ring is configured to have a lip part that is in sliding contact with the outer circumferential surface of the liner and to have the lip part on a stern side of a key part held by the housing.

6. The stern tube seal system as claimed in any one of claims 1-5, comprising
a fourth seal ring configured to be supported by the housing on a stem side of the second seal ring and to be in sliding contact with the outer circumferential surface of the liner to form a lubricant oil chamber between the second seal ring and the fourth seal ring, wherein
the lubricant oil circulation part is configured to include a first circulation passage configured to circulate the lubricant oil in the stern tube, and a second circulation passage configured to circulate the lubricant oil in the lubricant oil chamber.

7. The stern tube seal system as claimed in claim 6, wherein
the fourth seal ring is configured to have a lip part that is in sliding contact with the outer circumferential surface of the liner, and to have the lip part on a stem side of a key part held by the housing.

8. A stern tube seal apparatus, preventing lubricant oil from flowing out from a stern tube that covers a propeller shaft, the stern tube seal apparatus comprising:
a tubular housing configured to have the propeller shaft inserted therethrough;
a first seal ring configured to be supported by the housing and to be in sliding contact with an outer circumferential surface of a liner that externally fits on the propeller shaft; and
a second seal ring configured to be supported by the housing on a stem side of the first seal ring, to be in sliding contact with the outer circumferential surface of the liner to form an air chamber between the first seal ring and the second seal ring, air being supplied to the air chamber at an air pressure greater than or equal to a sea water pressure that is on a stern side of the first seal ring, the second seal ring being configured to separate the air chamber from the inside of the stern tube in which the lubricant oil is circulated at an oil pressure lower than the sea water pressure.

9. A ship comprising the stern tube seal system as claimed in any one of claims 1-7.

10. A stern tube seal method for preventing lubricant oil from flowing out from a stern tube that covers a propeller shaft, the stern tube seal method comprising:
supplying air at an air pressure greater than or equal to a sea water pressure, which is on a stern side of a first seal ring, to an air chamber formed between the first seal ring, which is configured to be supported by a tubular housing and to be in sliding contact with an outer circumferential surface of a liner that externally fits on the propeller shaft and a second seal ring, which is configured to be supported by the housing on a stem side of the first seal ring and to be in sliding contact with the outer circumferential surface of the liner, the housing being configured to have the propeller shaft inserted therethrough; and
circulating the lubricant oil in the stern tube at an oil pressure lower than the sea water pressure.
